# EUROPEAN PATENT APPLICATION

(11) **EP 4 614 292 A1**
(43) Date of publication of application: **10.09.2025**
(21) Application number: 24890039.1
(22) Date of filing: 28.05.2024
(51) Int. Cl.: G06F 3/041, G06F 3/04883, G06F 18/214, G06F 18/2411

(54) **METHOD FOR PREVENTING INADVERTENT TOUCH OF TOUCH SCREEN, AND RELATED APPARATUS**

(30) Priority: 14.11.2023 CN 202311516700
(71) Applicant: Huawei Technologies Co., Ltd., Shenzhen, Guangdong 518129 (CN)
(72) Inventor: ZHENG, Mengya, Shenzhen, Guangdong 518129 (CN); BAI, Zhongjia, Shenzhen, Guangdong 518129 (CN); CHEN, Zhikai, Shenzhen, Guangdong 518129 (CN); CHENG, Linsong, Shenzhen, Guangdong 518129 (CN)
(74) Representative: Maiwald GmbH
(86) International application number: PCT/CN2024/095723
(87) International publication number: WO 2025/102669

(57) **Abstract**

This application provides a method for preventing an accidental touch on a touchscreen. The method is applied to a writing process on a canvas of a touchscreen, and includes: detecting at least one touch point; determining a small-area touch point and/or a large-area touch point based on an area of the at least one touch point, and responding to a first operation based on a quantity of touch points; determining a touch point in an accidental touch mode and a touch point in a non-accidental touch mode based on a quantity and movement features of large-area touch points and/or a quantity and movement features of small-area touch points, where the movement feature includes one or more of a movement velocity, a movement track, a movement direction, and stay duration; and responding to a second operation for the touch point in the accidental touch mode, where the second operation is used to cancel the first operation and process a result of the first operation. According to the method, an accidental touch on the touchscreen can be effectively avoided, and user experience can be improved.

## Description

This application claims priority to Chinese Patent Application No. 202311516700.1, filed on November 14, 2023 and entitled "METHOD FOR PREVENTING ACCIDENTAL TOUCH ON TOUCHSCREEN AND RELATED APPARATUS", which is incorporated herein by reference in its entirety.

### TECHNICAL FIELD

This application relates to the field of terminal device technologies, and in particular, to a method for preventing an accidental touch on a touchscreen and a related apparatus.

### BACKGROUND

Currently, sizes of touchscreens of terminal devices such as a mobile phone, a notebook computer, and a tablet computer in the market are increasingly large. In a process in which a user uses a touchscreen whiteboard or another touchscreen device to perform annotation, a problem that one hand cannot write normally or another operation gesture is triggered accidentally occurs because the other hand holds an edge of the touchscreen. Currently, during writing, most users are accustomed to writing with one hand and holding the edge of the touchscreen with the other hand. In addition, when a plurality of touch points are detected on the touchscreen at the same time, various issues are triggered accidentally, for example, modes such as accidental erasing and accidental zooming. To avoid impact on normal writing, accurate determining of an intent of a touch point is a key to resolving the current problem. In other words, resolving an accidental touch on the touchscreen becomes an urgent problem to be resolved.

### SUMMARY

According to a first aspect, this application provides a method for preventing an accidental touch on a touchscreen, mainly applied to a writing process on a canvas of a touchscreen, and including: detecting at least one touch point; determining a small-area touch point and/or a large-area touch point based on an area of the at least one touch point, and responding to a first operation based on a quantity of touch points; determining a touch point in an accidental touch mode and a touch point in a non-accidental touch mode based on a quantity and movement features of large-area touch points and/or a quantity and movement features of small-area touch points, where the movement feature includes one or more of a movement velocity, a movement track, a movement direction, and stay duration; and responding to a second operation for the touch point in the accidental touch mode, where the second operation is used to cancel the first operation and process a result of the first operation.

This solution provides a method for preventing an accidental touch on a touchscreen. The method can effectively avoid impact of an accidental touch point in a normal writing process, and can effectively improve use experience of a user.

In a possible implementation, the determining a small-area touch point and/or a large-area touch point based on an area of the at least one touch point, and responding to a first operation based on a quantity of touch points includes: enabling a writing mode based on a single small-area touch point; enabling a moving/zooming waiting mode based on at least two small-area touch points that appear in a first time interval; and enabling an eraser erase mode based on the large-area touch point.

In this solution, an intent of the touch point may be determined based on areas and the quantity of detected touch points. For example, if a detection and determining result is the single small-area touch point, the writing mode is usually enabled; for the at least two small-area touch points, the canvas-moving/zooming waiting mode is enabled; and for the large-area touch point, the eraser erase mode is enabled.

In a possible implementation, the responding to a second operation for the touch point in the accidental touch mode includes: for a single small-area touch point determined to be in the accidental touch mode, interrupting a writing operation of the single small-area touch point and erasing a writing stroke of the single small-area touch point; for at least two small-area touch points determined to be in the accidental touch mode, interrupting a moving/zooming waiting operation of the at least two small-area touch points and freezing the canvas; and for a large-area touch point determined to be in the accidental touch mode, interrupting an erase operation of the large-area touch point and restoring an erase stroke of the large-area touch point.

In a possible implementation, the determining a touch point in an accidental touch mode and a touch point in a non-accidental touch mode based on a quantity and movement features of large-area touch points and/or a quantity and movement features of small-area touch points includes: determining, based on the quantity and the movement features of the large-area touch points, that the large-area touch point is one of a touch point in an eraser mode and the touch point in the accidental touch mode; and determining, based on the quantity and the movement features of the small-area touch points, that the small-area touch point is one of a touch point in a moving/zooming mode, a touch point in a writing mode, and the touch point in the accidental touch mode.

In a possible implementation, the determining, based on the quantity and the movement features of the large-area touch points, that the large-area touch point is one of a touch point in an eraser mode and the touch point in the accidental touch mode includes: determining that a large-area touch point meeting a first condition is the touch point in the accidental touch mode, where the first condition is that a movement velocity of a touch point is less than a first preset velocity and stay duration of the touch point is greater than first preset duration, and the touch point is determined to be the touch point in the accidental touch mode.

In this solution, when the touch point meets the first condition, it is considered that the touch point is in a relatively static state, and therefore is considered to be in the accidental touch mode.

In a possible implementation, the determining, based on the quantity and the movement features of the small-area touch points, that the small-area touch point is one of a touch point in a moving/zooming mode, a touch point in a writing mode, and the touch point in the accidental touch mode includes: determining that a small-area touch point meeting a first condition is the touch point in the accidental touch mode; and when at least two small-area touch points do not meet the first condition, and movement directions of the at least two small-area touch points do not meet a second condition, determining that the at least two small-area touch points are accidental touch points, where the second condition includes one of regular movement, movement in a same direction, movement toward each other in opposite directions, and movement in an opposite direction.

In this solution, when the touch point does not meet the first condition, determining in a subsequent step further needs to be performed. When the at least two small-area touch points do not meet any one of the regular movement, the movement in a same direction, the movement toward each other in opposite directions, or the movement in an opposite direction, it is considered that the at least two touch points are the accidental touch points.

In a possible implementation, the determining a touch point in an accidental touch mode and a touch point in a non-accidental touch mode based on a quantity and movement features of large-area touch points and/or a quantity and movement features of small-area touch points includes: determining the touch point in the accidental touch mode and the touch point in the non-accidental touch mode based on the quantity, the movement features, and previous events of nearby regions of the large-area touch points and/or the quantity, the movement features, and previous events of nearby regions of the small-area touch points.

For example, the method is mainly used to detect appearance of another touch point in the writing process on the touchscreen based on the area of the touch point, the quantity of touch points, the movement feature of the touch point, and the nearby-area previous event of the touch point. The nearby-area previous event is whether a touch point is detected in the first time interval before the touch point falls in a specific region range, where the first time interval may be a manually set short time interval, and the feature is mainly used to determine whether it is detected that another touch point falls before a single small-area touch point that is a writing touch point in a specific range around the touch point.

According to a second aspect, this application provides an apparatus for preventing an accidental touch on a touchscreen, used in a writing process on a canvas of a touchscreen, and including: a detection module, configured to detect a touch point that appears on the touchscreen; a processing module, configured to: determine a small-area touch point and/or a large-area touch point based on an area of at least one detected touch point, and respond to a first operation based on a quantity of touch points; and a determining module, configured to determine a touch point in an accidental touch mode and a touch point in a non-accidental touch mode based on a quantity and movement features of large-area touch points and/or a quantity and movement features of small-area touch points, where the movement feature includes one or more of a movement velocity, a movement track, a movement direction, and stay duration. The processing module is further configured to respond to a second operation for the touch point in the accidental touch mode, where the second operation is used to cancel the first operation and process a result of the first operation.

In a possible implementation, the responding to a first operation based on a quantity of touch points includes: enabling a writing mode based on a single small-area touch point; enabling a moving/zooming waiting mode based on at least two small-area touch points that appear in a first time interval; and enabling an eraser erase mode based on the large-area touch point.

In a possible implementation, that the processing module responds to a second operation for the touch point in the accidental touch mode includes: for a single small-area touch point determined to be in the accidental touch mode, interrupting a writing operation of the single small-area touch point and erasing a writing stroke of the single small-area touch point; for at least two small-area touch points determined to be in the accidental touch mode, interrupting a moving/zooming waiting operation of the at least two small-area touch points and freezing the canvas; and for a large-area touch point determined to be in the accidental touch mode, interrupting an erase operation of the large-area touch point and restoring an erase stroke of the large-area touch point.

In a possible implementation, the determining a touch point in an accidental touch mode and a touch point in a non-accidental touch mode based on a quantity and movement features of large-area touch points and/or a quantity and movement features of small-area touch points includes: determining, based on the quantity and the movement features of the large-area touch points, that the large-area touch point is one of a touch point in an eraser mode and the touch point in the accidental touch mode; and determining, based on the quantity and the movement features of the small-area touch points, that the small-area touch point is one of a touch point in a moving/zooming mode, a touch point in a writing mode, and the touch point in the accidental touch mode.

In a possible implementation, the determining, based on the quantity and the movement features of the large-area touch points, that the large-area touch point is one of a touch point in an eraser mode and the touch point in the accidental touch mode includes: determining that a large-area touch point meeting a first condition is the touch point in the accidental touch mode, where the first condition is that a movement velocity of a touch point is less than a first preset velocity and stay duration of the touch point is greater than first preset duration, and the touch point is determined to be the touch point in the accidental touch mode.

In a possible implementation, the determining, based on the quantity and the movement features of the small-area touch points, that the small-area touch point is one of a touch point in a moving/zooming mode, a touch point in a writing mode, and the touch point in the accidental touch mode includes: determining that a small-area touch point meeting a first condition is the touch point in the accidental touch mode; and when at least two small-area touch points do not meet the first condition, and movement directions of the at least two small-area touch points do not meet a second condition, determining that the at least two small-area touch points are accidental touch points, where the second condition includes one of regular movement, movement in a same direction, movement toward each other in opposite directions, and movement in an opposite direction.

In a possible implementation, the determining a touch point in an accidental touch mode and a touch point in a non-accidental touch mode based on a quantity and movement features of large-area touch points and/or a quantity and movement features of small-area touch points includes: determining the touch point in the accidental touch mode and the touch point in the non-accidental touch mode based on the quantity, the movement features, and previous events of nearby regions of the large-area touch points and/or the quantity, the movement features, and previous events of nearby regions of the small-area touch points.

According to a third aspect, a touchscreen device is provided. The touchscreen device includes at least a touchscreen and a processor, and during writing on the touchscreen, the processor performs the method according to any one of the first aspect or the possible implementations of the first aspect.

According to a fourth aspect, a computer-readable storage medium is provided. The computer-readable storage medium includes instructions, and when the instructions are run on a computer, the computer performs the method according to any one of the first aspect or the possible implementations of the first aspect.

According to a fifth aspect, a computer program product is provided. The computer program product includes instructions, and when the instructions are run on a computer, the computer performs the method according to any one of the first aspect or the possible implementations of the first aspect.

### BRIEF DESCRIPTION OF DRAWINGS

FIG. 1a is a diagram of an architecture of an application scenario according to an embodiment of this application;
FIG. 1b is a diagram of an architecture of another application scenario according to an embodiment of this application;
FIG. 1c is a diagram of an architecture of another application scenario according to an embodiment of this application;
FIG. 1d is a diagram of an architecture of another application scenario according to an embodiment of this application;
FIG. 1e is a diagram of an architecture of another application scenario according to an embodiment of this application;
FIG. 2 is a flowchart of a method for preventing an accidental touch on a touchscreen according to an embodiment of this application;
FIG. 3 is a flowchart of another method for preventing an accidental touch on a touchscreen according to an embodiment of this application;
FIG. 4 is a flowchart of another method for preventing an accidental touch on a touchscreen according to an embodiment of this application; and
FIG. 5 is a flowchart of another method for preventing an accidental touch on a touchscreen according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely a part of but not all of embodiments of this application. A person of ordinary skill in the art may learn that, with emergence of a new application scenario, the technical solutions provided in embodiments of this application are also applicable to a similar technical problem.

In the specification, claims, and accompanying drawings of this application, the terms "first", "second", and the like are intended to distinguish between similar objects, but do not necessarily indicate a specific order or sequence. It should be understood that descriptions used in such a way are interchangeable in proper circumstances, so that embodiments can be implemented in orders other than the order illustrated or described in this application. In addition, the terms "include", "have" and any variant thereof mean to cover the non-exclusive inclusion, for example, a process, method, system, product, or device that includes a list of steps or modules is not necessarily limited to those steps or modules expressly listed, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved.

Division into the units in this application is logical division. In actual application, there may be another division manner. For example, a plurality of units may be combined or integrated into another system, or some features may be ignored or not performed. In addition, the displayed or discussed mutual couplings, direct couplings, or communication connections may be implemented through some interfaces, and the indirect couplings or communication connections between the units may be implemented in an electrical form or another similar form. This is not limited in this application. In addition, units or subunits described as separate parts may be or may not be physically separated, may be or may not be physical units, or may be distributed to a plurality of circuit units. Some or all of the units may be selected based on an actual requirement to achieve an objective of the solutions in this application.

For ease of understanding, the following first describes some technical terms and physical components in embodiments of this application.

### (1) Large-size electronic touchscreen

The large-size electronic touchscreen is a large-size screen having a multi-touch function, and includes but is not limited to a capacitive screen, an infrared screen, a resistive screen, and the like.

### (2) Writing pen

The writing pen is a stylus pen that can be used to write on the electronic touchscreen, and includes but is not limited to a capacitive pen, a passive pen, an active pen, and the like.

### (3) Canvas

The canvas exists on the touchscreen. The canvas is used to place a control and is used as a region restriction for dragging and stretching the control. A canvas module sets a background image or a background color, control orchestration, a canvas scale, a responsive canvas, full-screen display, and the like.

### (4) SVM model

An SVM is also referred to as a support vector machine (support vector machine, SVM), and is a binary classification model whose basic model is a linear classifier, defined in eigenspace, with a maximum interval, and a learning policy of the SVM is interval maximization. In addition, the method can be formalized into a solution graph quadratic programming.

In embodiments, the SVM model is used to generate a classifier in a mode in which a plurality of touch points move relatively.

In a training process, relative movement direction features of all touch points in pairs in 100 ms in a movement scenario, a zooming gesture scenario, and an accidental touch writing scenario in a training set are extracted to support the SVM model to distinguish between the three types of scenarios. In an inference process, a plurality of to-be-inferred touch points are combined in pairs, and a relative movement direction feature of two touch points in 100 ms is obtained as an input feature of the classifier. A scenario classification result (the movement, zoom, or accidental touch scenario) of the classifier for an input is obtained based on feature vector distribution of the input feature. Provided that any pair of touch points in all existing touch points are classified as moving or zooming touch points by the classifier, it is determined that a current mode is a moving/zooming mode.

### (5) GRU model

A GRU is a gate neural unit, and is a variant of a recurrent neural network. The GRU (gated recurrent unit, GRU) uses an update gate (update gate) and a reset gate (reset gate). Basically, the two gating vectors determine which information can finally be used as an output of the gated recurrent unit. A particularity of the two gating mechanisms is that the two gating mechanisms can store information in a long-term sequence and the information is not cleared over time or removed because the information is not related to a prediction.

In embodiments, the GRU model may be used to generate a classifier in a mode in which a plurality of touch points move relatively.

A training manner of the classifier that is in the mode in which a plurality of touch points move relatively and that is based on the GRU model is basically the same as that of an SVM classifier. A difference lies in that if features of relative movement directions of the plurality of touch points in a relatively long time window needs to be classified, the GRU model instead of the SVM model needs to be used.

A main application scenario of this application is an accidental touch scenario in which when a user performs writing annotation by using a large-screen whiteboard or other annotation software, one hand cannot normally write or another operation gesture is triggered accidentally because the other hand holds an edge of a screen. When writing on a large screen, many users are accustomed to writing with a hand and holding the edge of the screen with the other hand. However, the hand holding the edge of the screen accidentally triggers writing to leave an unwanted stroke of the user, or accidentally erases an original stroke by invoking a palm erasing process, or causes canvas jumping by triggering canvas moving/zooming, and a response caused by these accidental touch parts on the whiteboard also makes the other hand, which is actually intended for writing, of the user unable to write normally.

To identify the accidental touch scenario and eliminate impact of an accidental touch according to a principle that experience of existing whiteboard multi-person writing and common gesture using is not affected, this application provides a method and an apparatus for preventing an accidental touch on a touchscreen. In this solution, processing is performed, for example, performing screen edge hot zone preliminary screening on any touch point obtained on the touchscreen, determining, based on a preliminary scenario of an area of an edge touch point, to immediately perform a common gesture response such as writing or erasing, analyzing a movement velocity and a trajectory of the edge touch point, analyzing a previous historical event of the edge touch point, identifying and predicting a scenario, canceling an existing operation process of an identified edge accidental touch point, revoking non-intentional impact formed by the accidental touch (elimination of an accidental touch stroke, restoration of accidentally erased content, and the like), and ignoring and shielding a processed accidental touch point to avoid any impact of such a touch point on another subsequent touch point, to resolve a problem of the accidental touch.

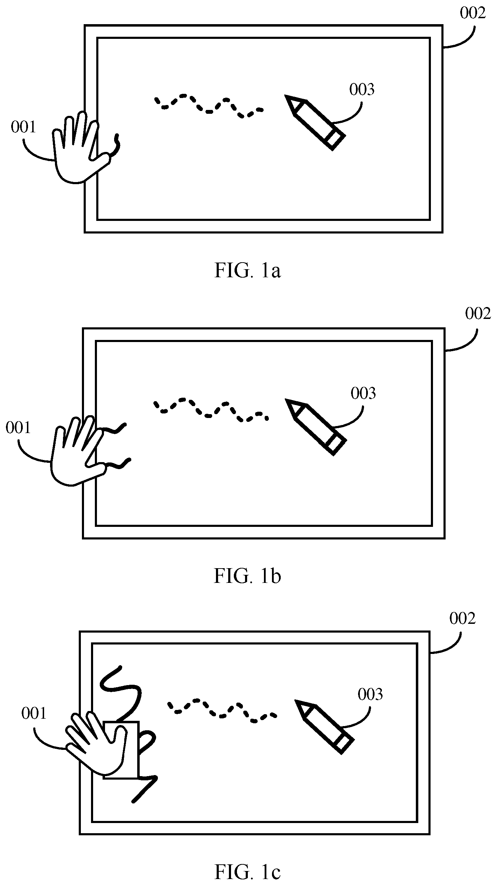

FIG. 1a to FIG. 1e are diagrams of architectures of some application scenarios according to embodiments of this application. As shown in FIG. 1a to FIG. 1e, the application scenarios each include a touch point generator 001, a touchscreen device 002, and a writing pen 003. The touch point generator 001 may be a hand of a user, or may be any other object that can generate a touch point on a touchscreen. In addition, a plurality of touch point generators 001 may exist at the same time, each touch point generator 001 may generate a plurality of touch points at a time, and initial falling point locations and areas of all the touch points may be different. The touchscreen device 002 may be a terminal electronic device such as a mobile phone, a watch, a tablet computer, or a notebook computer.

As shown in FIG. 1a, the touch point generator 001 holds an edge of the touchscreen device 002, and the other hand holds the writing pen 003 to write on the touchscreen. It can be seen that the first hand holds an edge side of the touchscreen, and some stroke lines are generated due to an accidental touch. In this case, a method for preventing the accidental touch on the touchscreen is applied.

As shown in FIG. 1b, in a possible scenario, the touch point generator 001 on an edge of the touchscreen 002 leaves two or more strokes in a two-person or multi-person writing mode, and in this case, if a writable channel is fully occupied by an accidental touching hand on the edge, the writing pen may not be able to write any more. In this scenario, a method for preventing an accidental touch on the touchscreen is applied.

In addition, another scenario is common in life and work. As shown in FIG. 1c, the touch point generator 001 in the figure also holds an edge side of the touchscreen device 002, and the other hand is writing on the touchscreen device 002 by holding the writing pen 003. It can be seen that, a stroke written previously is covered by the hand holding the touchscreen of the user, and the original written stroke is erased due to an accidental touch of the hand holding the touchscreen. In this case, a method for preventing the accidental touch on the touchscreen is also applied.

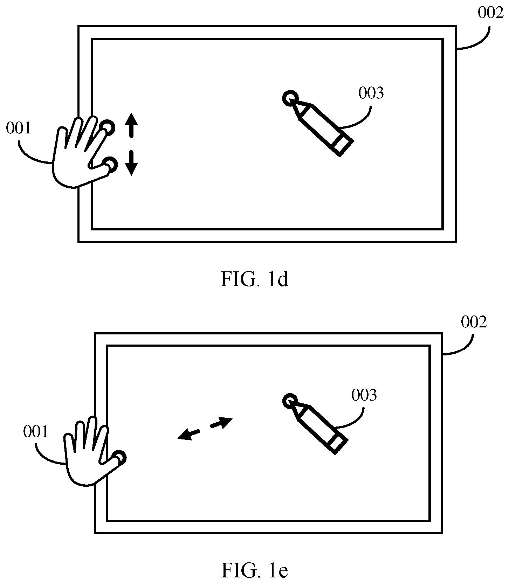

As shown in FIG. 1d, the touch point generator 001 holds an edge side of the touchscreen and two or more fingers accidentally touch the touchscreen device 002. Because it is sensed that a plurality of writing touch points already exist, in this case, the other hand cannot produce a stroke by holding the writing pen. In this case, a solution of this application is also applied.

As shown in FIG. 1e, in a possible scenario, an accidental touching finger that is of the touch point generator 001 and that holds an edge side of the touchscreen 002 and the writing pen or the other hand that is intended for writing and that is pressed in another region almost at the same time together accidentally trigger a canvas-moving/zooming mode. In this case, the writing pen or the hand that is actually intended for writing cannot write. In this scenario, an accidental touch or a requirement of normal canvas zooming may also be obtained by analyzing a movement status of a plurality of touch points in this application.

The foregoing are five simple examples of the application scenarios of preventing the accidental touch on the touchscreen provided in this application. Because there are many accidental touch scenarios in actual operations, it is difficult to list the scenarios one by one herein. This application declares that all scenarios in which a plurality of touch points exist on one touchscreen may fall in the application scope of this application. The writing pen is optional, and may be any device or object that can write on the touchscreen. The touch points may come from one user or may come from two users, and a scenario of accidental touches of a plurality of hands is also included. This is not limited herein.

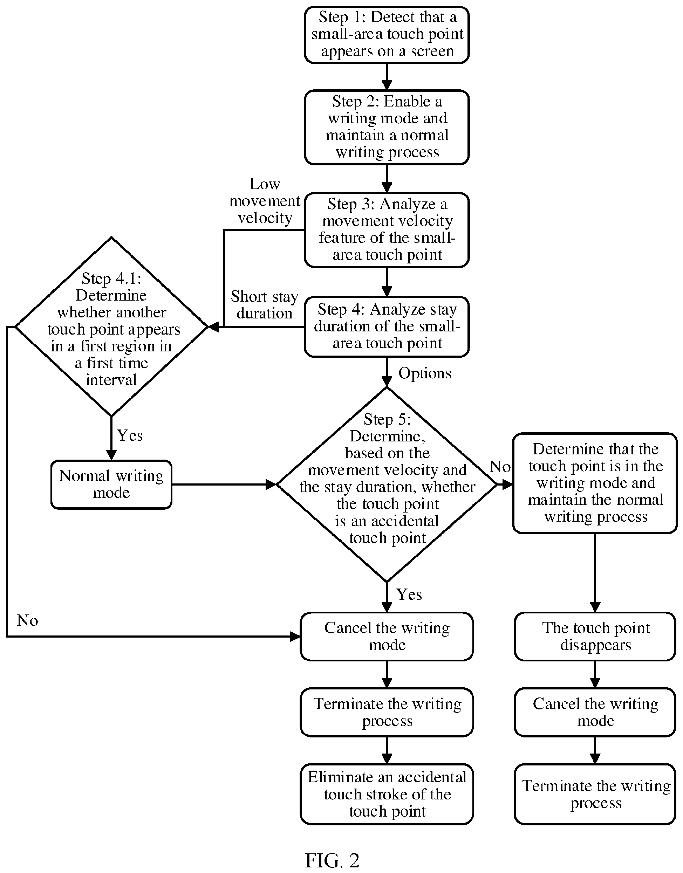

FIG. 2 is a flowchart of a method for preventing an accidental touch on a touchscreen according to an embodiment of this application. In this embodiment, a scenario in which an area of an accidental touch point is the same as an area of a writing touch point on a screen is mainly described. The following steps describe how to perform an accidental touch prevention response to meet a requirement that normal writing and a normal operation on the screen are not affected by an accidental touch. In this embodiment, for such an accidental touch scenario, a writing process response is first started in time, a normal writing mode and an accidental touch mode are distinguished based on a movement velocity and stay duration of a touch point, and whether to stop the writing mode and erase a writing stroke is determined.

For example, as shown in FIG. 2, a specific procedure is as follows:
Step 1: Detect that a small-area touch point appears on the screen.

It is detected that a touch point appears on the touchscreen, and it can be learned, based on an area of the touch point, that the area of the touch point is similar to the area of the writing touch point. Therefore, it is determined that at least one touch point is a small-area touch point. The following determining and processing operations are performed on the small-area touch point.

Step 2: Enable the writing mode and maintain a normal writing process.

The writing mode is enabled for each writing touch point and the writing process is started immediately for the writing touch point. In the writing mode, a processing apparatus in the touchscreen generates a writing stroke in a corresponding region along a real-time movement track of the writing touch point.

Step 3: Analyze a movement velocity feature of the small-area touch point.

When the writing mode is enabled, the movement velocity feature of the small-area touch point is extracted in a specific time series and a velocity change of the small-area touch point is analyzed continuously.

In a possible implementation, whether movement of the small-area touch point meets the accidental touch mode or the normal writing mode is determined by using an SVM model or a GRU model, and movement velocity data of the small-area touch point is input into the SVM model or the GRU model. The model analyzes a feature of the movement data, and outputs a result that the small-area touch point belongs to the writing mode or the accidental touch mode.

In another implementation, determining may be performed in the following manner: 20 ms is used as a time interval, movement velocity data of the small-area touch point in a time period from 100 ms to 200 ms when the small-area touch point moves is sampled, and analysis and determining are performed based on a sampling result. When a movement distance of the small-area touch point at the movement velocity in 20 ms does not exceed 0.1 pixel, it is considered that the small-area touch point moves at a low speed. If the small-area touch point keeps moving at a low speed in an observation time window from 100 ms to 200 ms, it is considered that the small-area touch point is currently in the accidental touch mode. Otherwise, it is determined that the small-area touch point is in the writing mode.

For a touch point determined to be in the accidental touch mode, the writing mode is immediately canceled for the touch point, a writing process of the touch point is terminated, and an accidental touch stroke of the touch point is eliminated. The accidental touch point that has been determined is shielded, and the shielded touch point is not included in scenario prediction or a response range in subsequent determining or a subsequent response of a new touch point event.

For a touch point determined to be in the normal writing mode, step 4 needs to be performed for further analysis.

Step 4: Analyze stay duration of the small-area touch point.

For the touch point determined to be in the normal writing mode in the previous step 3, low-speed movement duration further needs to be analyzed continuously. An analysis process is usually comparing duration in which the current touch point keeps moving at a low speed with a preset threshold. The preset threshold may be customized based on a user requirement. In a possible implementation, the preset threshold is 100 ms. When the duration in which the touch point keeps moving at a low speed is greater than 100 ms, it is considered that the touch point is in the accidental touch mode. When the duration in which the touch point keeps moving at a low speed is less than or equal to the threshold, it is considered that the touch point is still in the writing mode.

For the touch point determined to be in the accidental touch mode, the writing mode is immediately canceled for the touch point, the writing process of the touch point is terminated, and the accidental touch stroke of the touch point is eliminated. The accidental touch point that has been determined is shielded, and the shielded touch point is not included in the scenario prediction or the response range in the subsequent determining or the subsequent response of the new touch point event.

For the touch point determined to be in the normal writing mode, step 5 needs to be performed for further analysis.

Step 4.1: Determine whether a touch point appears in a first region in a first time interval.

This step is mainly used to determine whether another small-area touch point appears in a surrounding region of a falling point of the small-area touch point in a time window before and after the small-area touch point is detected. A size of the time window may be customized based on a specific implementation requirement, and a size of the surrounding region may also be customized based on the specific requirement.

When a determining result is "yes", it is considered that the small-area touch point is in the normal writing mode, and further analysis and determining are performed on a movement feature of the small-area touch point in the following step 5.

When a determining result is "no", it is considered that the small-area touch point is in the accidental touch mode. In this case, the writing mode needs to be canceled, the writing process needs to be terminated, and the accidental touch stroke of the small-area touch point needs to be immediately eliminated. The accidental touch point that has been determined is shielded, and the shielded touch point is not included in the scenario prediction or the response range in the subsequent determining or the subsequent response of the new touch point event.

Step 5: Determine, based on the movement velocity and the stay duration, whether the touch point is the accidental touch point.

It can be learned from the foregoing analysis in step 3, step 4, and step 4.1 that, a small-area touch point that enters a current step and is not shielded is determined to be a non-accidental touch point, the writing mode is maintained for the small-area touch point, and the normal writing process is executed. When the small-area touch point disappears, it is considered that a normal end action is performed. In this case, the writing mode is canceled for the touch point, and the writing process is stopped immediately.

In this embodiment, when a single small-area touch point is detected, an intent of the small-area touch point is determined. When it is determined that the small-area touch point is the accidental touch point, the writing mode needs to be canceled, the writing process needs to be terminated, a writing stroke of the small-area touch point needs to be eliminated in time, the accidental touch point is shielded, and analysis and determining are not performed on the accidental touch point in a subsequent scenario. For the touch point for normal writing, the determining process does not affect the normal writing process and does not cause interference.

In a possible implementation of this embodiment, a response and processing may be performed, in time, on an accidental touch point that is obtained through holding and that is in an edge region of the screen, so that not only the accidental touch point can be efficiently processed, but also impact of the accidental touch point on the touch point for normal writing can be effectively eliminated. The method can effectively improve processing efficiency and use experience of a user in the accidental touch scenario.

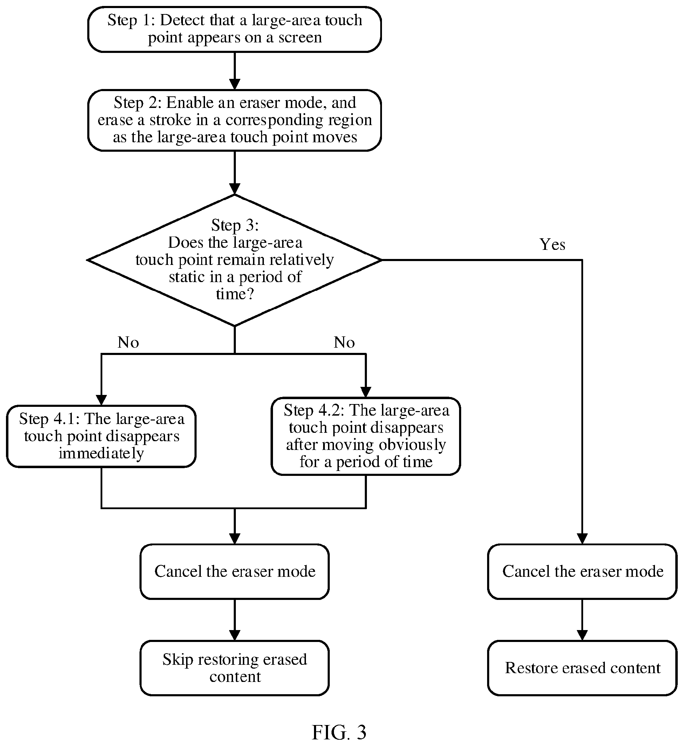

FIG. 3 is a flowchart of another method for preventing an accidental touch on a touchscreen according to an embodiment of this application. In this embodiment, how to perform an accidental touch prevention response to meet a requirement that normal writing and a normal operation on a screen are not affected by an accidental touch in a scenario in which a palm holding an edge of the screen accidentally triggers palm erasing is mainly described. In this embodiment, an erase response is first performed for such a screen holding accidental touch scenario in time. In addition, a normal palm erasing scenario and the screen holding accidental touch scenario are distinguished based on a movement velocity and stay duration of a hand holding the screen, and whether to interrupt an eraser and whether to restore erased content are determined.

For example, as shown in FIG. 3, a specific procedure is described as follows:
Step 1: Detect that a large-area touch point appears on the screen.

A touchscreen device detects that one or more large-area touch points appear on the touchscreen, and performs determining and operations in the following step 2 to step 4.2 on each large-area touch point.

Step 2: Enable an eraser mode, and erase a stroke in a corresponding region as the large-area touch point moves.

The device receives a detection result, enables the eraser mode, and sets a value of a pixel corresponding to the touch point to 0 as the touch point moves, that is, erases stroke content in a region corresponding to the stroke. In addition, the device continues to detect a movement feature of the large-area touch point, and performs determining and corresponding processing based on a specific running status.

Step 3: Determine whether the large-area touch point remains relatively static in a period of time.

First, a movement velocity of the large-area touch point needs to be determined. In other words, whether the large-area touch point remains relatively static in a period of time is determined. If a determining result is "yes", it is considered that the large-area touch point is in an accidental touch mode. If a determining result is "no", further determining needs to be continuously performed based on a subsequent step, to provide a processing decision.

In a possible implementation, determining that the large-area touch point remains relatively static in a period of time may be:
determining whether the large-area touch point moves by more than 0.1 pixel every 20 ms. If the large-area touch point does not move by more than 0.1 pixel, it is considered that the large-area touch point is in a relatively static state, in other words, a location of the touch point does not change obviously. If the large-area touch point moves by more than 0.1 pixel, it is considered that the large-area touch point moves obviously and is in a non-relatively static state. If the large-area touch point remains relatively static in a period of time, the touchscreen device cancels the eraser mode, and restores the erased stroke content. If the large-area touch point moves obviously in a period of time, the large-area touch point needs to be further determined, and the following step 4.1 and step 4.2 are performed.

Step 4.1: The large-area touch point disappears immediately.

If the large-area touch point disappears immediately, the touchscreen device immediately cancels the eraser mode, and does not restore the erased stroke content.

Step 4.2: The large-area touch point moves obviously in a period of time.

If the location of the large-area touch point changes obviously, the touchscreen device maintains the eraser mode, erases the stroke content in the corresponding region of the touch point as the touch point moves, and immediately cancels the eraser mode when the large-area touch point disappears.

Whether the location of the large-area touch point changes obviously may be determined by selecting a movement velocity of the touch point in a period of time after the touch point moves stably. There are two determining manners. One manner is determining in a manner of manually setting a threshold. For example, a time period from 100^{th} ms to 200^{th} ms when the touch point starts to move from an initial falling point is selected, and 20 ms is used as a time interval to determine whether the large-area touch point moves by more than 0.1 pixel every 20 ms. If the large-area touch point moves by more than 0.1 pixel, it is considered that the touch point moves at a high speed, in other words, the location of the touch point changes obviously, and it is considered that the touch point is in the eraser mode. Otherwise, it is considered that the touch point moves at a low-speed, in other words, the location of the large-area touch point does not change obviously, and it is considered that the touch point is in the accidental touch mode. The other manner is determining by using a movement velocity determining model. For example, an SVM model or a GRU model is used to determine a movement velocity of the large-area touch point in a period of time (which generally means a period of time after the touch point moves stably, where for example, the time interval from 100^{th} ms to 200^{th} ms when the touch point starts to move from an initial falling point location is selected). Based on comparison, whether the movement velocity of the large-area touch point belongs to the eraser mode or the accidental touch mode is determined.

In a possible implementation of this embodiment, when a display screen device detects a plurality of touch points, regardless of whether the touch points are located in an edge hot zone of a display screen or in a non-edge hot zone of the display screen, the foregoing steps may be applied to perform mode determining. The edge hot zone of the display screen is a region that is one palm away from an edge location of the touchscreen, and the region is usually 15 cm, to be specific, an image region including about 300 pixels. In addition, the touch points may come from a same user, or may come from different users, and a quantity and locations of the touch points are not strictly limited either.

In this embodiment, a method for preventing the accidental touch on the touchscreen is provided. In the method, whether to invoke an accidental touch prevention mechanism of an eraser is determined based on an initial movement velocity of the large-area touch point. Specifically, in this solution, the eraser mode is immediately enabled for the detected large-area touch point, then whether to cancel the eraser mode to prevent accidental touch erasing is determined based on a movement status of the large-area touch point. In this solution, a corresponding operation is performed through two times of detection and determining, and use experience of a palm erase gesture is not limited.

In addition, in this embodiment, no conflict exists between a normal touch point and an accidental touch point of a writing pen nib, and adding of the accidental touch point does not affect a normal writing action of a writing touch point. Therefore, in this solution, an operation of writing and touching by multiple persons at the same time is not affected while the accidental touch is prevented.

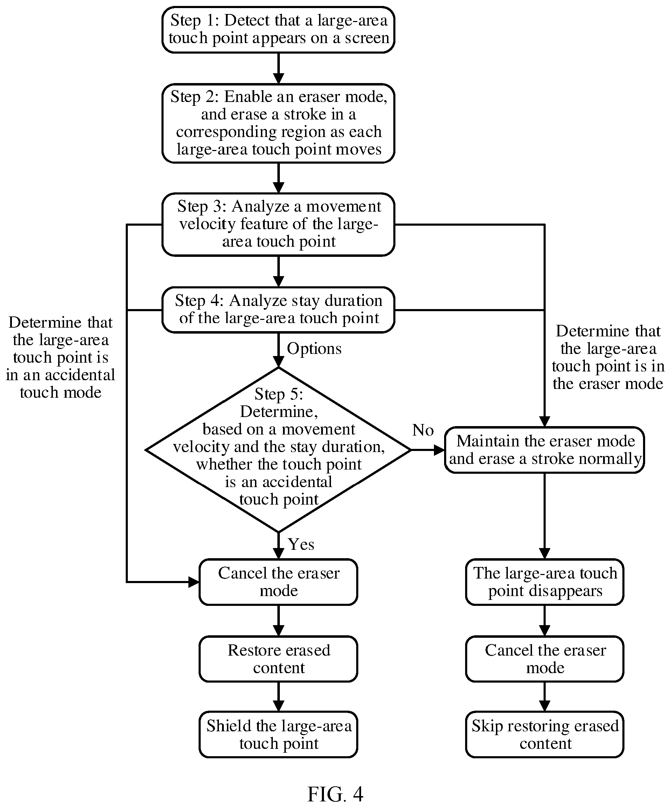

FIG. 4 is a flowchart of another method for preventing an accidental touch on a touchscreen according to an embodiment of this application. In this embodiment, processing is mainly performed for a scenario in which a large-area touch point is detected and an eraser mode is enabled.

For example, as shown in FIG. 4, a specific procedure is described as follows:

Step 1: Detect that a large-area touch point appears on a screen.

It is detected that one or more touch points appear on the touchscreen, and it can be learned, based on an area of the one or more touch points, that the one or more touch points are all large-area touch points. The following determining and processing operations are separately performed on each large-area touch point that has been determined.

Step 2: Enable the eraser mode, and erase a stroke in a corresponding region as each large-area touch point moves.

The eraser mode is enabled for each large-area touch point, and an eraser is immediately invoked for the touch point to start an erase process. In the eraser mode, a processing apparatus in the touchscreen erases the stroke in the corresponding region along a real-time movement track of the large-area touch point.

Step 3: Analyze a movement velocity feature of the large-area touch point.

When the eraser mode is enabled, the movement velocity feature of the large-area touch point is extracted in a specific time series and a velocity change of the large-area touch point is analyzed continuously.

In a possible implementation, whether movement of the large-area touch point meets an accidental touch mode or a normal eraser erase mode is determined by using an SVM model or a GRU model, and movement velocity data of the large-area touch point is input into the SVM model or the GRU model. The model analyzes a feature of the movement data, and outputs a result that the large-area touch point belongs to the eraser mode or the accidental touch mode.

In another implementation, determining may be performed in the following manner: 20 ms is used as a time interval, movement velocity data of the large-area touch point in a time period from 100 ms to 200 ms when the large-area touch point moves is sampled, and analysis and determining are performed based on a sampling result. When a movement distance of the large-area touch point at the movement velocity in 20 ms does not exceed 0.1 pixel, it is considered that the large-area touch point moves at a low speed. If the large-area touch point keeps moving at a low speed in an observation time window from 100 ms to 200 ms, it is considered that the large-area touch point is currently in the accidental touch mode. Otherwise, it is determined that the large-area touch point is in the eraser erase mode.

For a large-area touch point determined to be in the accidental touch mode, the eraser mode is immediately canceled for the large-area touch point, and content erased by the large-area touch point is restored. The accidental touch point that has been determined is shielded, and the shielded touch point is not included in scenario prediction or a response range in subsequent determining or a subsequent response of a new touch point event.

For a touch point determined to be in the normal eraser erase mode, step 4 needs to be performed for further analysis.

Step 4: Analyze stay duration of the large-area touch point.

For the touch point determined to be in the normal erase mode in the previous step 3, low-speed movement duration needs to be further analyzed continuously. An analysis process is usually comparing duration in which the current touch point keeps moving at a low speed with a preset threshold. The preset threshold may be customized based on a user requirement. In a possible implementation, the preset threshold is 100 ms. When the duration in which the touch point keeps moving at a low speed is greater than 100 ms, it is considered that the touch point is in the accidental touch mode. When the duration in which the touch point keeps moving at a low speed is less than or equal to the threshold, it is considered that the touch point is still in the erase mode.

For the large-area touch point determined to be in the accidental touch mode, the eraser mode is immediately canceled for the large-area touch point, and the content erased by the large-area touch point is restored. The accidental touch point that has been determined is shielded, and the shielded touch point is not included in the scenario prediction or the response range in the subsequent determining or the subsequent response of the new touch point event.

For the touch point determined to be in the normal eraser erase mode, step 5 needs to be performed for further analysis.

Step 5: Determine, based on the movement velocity and the stay duration, whether the touch point is the accidental touch point.

It can be learned from the foregoing analysis in step 3 and step 4 that, in large-area touch points that never keep moving at a low speed in a specific period of time, a touch point that can enter the current step and is not shielded is determined to be a non-accidental touch point. The eraser mode is maintained for the large-area touch point, and a stroke is normally erased. When the large-area touch point disappears, it is considered that an erase action is normally ended. In this case, the eraser mode is canceled for the touch point, and the erased stroke does not need to be restored.

In this embodiment, only a location region area of the touch point is determined in this solution, and whether an existing touch point is the accidental touch point is determined without depending on nib information of any previous or subsequent writing pen. Therefore, an accidental touch prevention mechanism in this embodiment still has a function of correctly determining and effectively preventing a misoperation for an independent accidental touch point formed by screen holding.

In a possible implementation of this embodiment, in this embodiment, determining may be performed only for a case in which the large-area touch point appears in an edge hot zone, and whether the large-area touch point is in the edge hot zone or in a non-edge hot zone may be determined based on an initial falling point location of the large-area touch point. A definition of the edge hot zone is as follows: A box is framed at a location that is a palm (which is generally about 15 cm, and about 300 pixels presented in an image) of an adult away from an edge of the screen, and a region between the box and the edge is referred to as the edge hot zone. In this scenario, determining may be performed for the case in which the large-area touch point appears in the edge hot zone because the edge hot zone is usually a region in which an accidental touch is most likely to appear, and determining of the region is a hotspot region that urgently needs to be resolved currently.

In a possible implementation of this embodiment, a falling point location of the touch point is not limited, and may be any location on the touchscreen. For example, the initial falling point location of the touch point may be an edge location, or may be a middle location on the touchscreen. A plurality of detected touch points are analyzed and checked one by one. For a touch point that has been analyzed, if the touch point is the accidental touch point formed by screen holding, the touch point is shielded. In this process, it is noted to shield a touch point whose analysis result is the accidental touch point, and a normal writing function or another operation function of a touch point that is a non-accidental touch point is not affected.

The foregoing embodiment simply shows a scenario in which the erase mode is enabled for the accidental touch of the touch point. In this scenario, the area of the detected touch point is mainly analyzed, and subsequent analysis is performed only when it is determined that the touch point is the large-area touch point. In addition to this scenario, another mode may be triggered for the touch point detected by the touchscreen. For example, when a plurality of small-area touch points are detected, a canvas-moving/zooming waiting mode may be triggered to be enabled. In this case, detailed analysis is performed in the following embodiments with reference to a specific situation.

In a possible implementation, in a scenario in which a plurality of touch points are detected at the same time, a canvas zooming mode may be accidentally invoked due to an accidental touch on the touchscreen. In this scenario, movement statuses of the plurality of detected touch points need to be analyzed, and whether the touch points are accidental touch points needs to be further determined based on an analysis result. If the touch points are the accidental touch points, impact of the detected accidental touch points needs to be ignored. If the touch points are in a non-accidental touch mode, a response needs to be performed for the detected touch points in time.

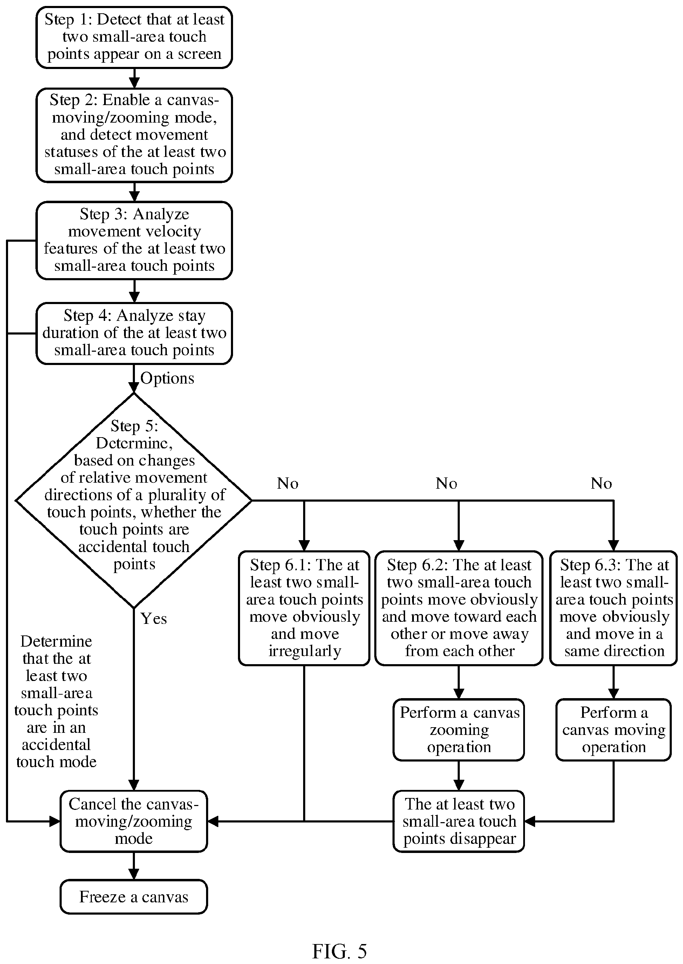

FIG. 5 is a flowchart of another method for preventing an accidental touch on a touchscreen according to an embodiment. To identify an accidental touch scenario in this embodiment, continuous movement velocity feature analysis and relative movement track analysis need to be performed on a plurality of small-area touch points on an edge of a screen at the same time, to predict whether the plurality of small-area touch points on the edge of the screen are touch points formed by a screen holding accidental touch or a canvas-moving/zooming gesture. For an identified accidental touch point formed by screen holding, canvas moving/zooming is terminated and a canvas is frozen in this application. The technical solution of this embodiment is as follows:
Step 1: Detect that at least two small-area touch points appear.

A touchscreen device detects that at least two touch points appear on the touchscreen in a first time interval. The first time interval may be a small time range that is manually set. Based on an area of the touch point, the touch point is a small-area touch point. When a determining result is that at least two small-area touch points exist, a canvas-moving/zooming mode is triggered to be enabled.

Step 2: Enable a canvas-moving/zooming waiting mode, and continue to detect a movement status of the small-area touch point.

The canvas-moving/zooming waiting mode is enabled for the at least two small-area touch points, and further analysis continues to be performed based on a current movement status of each small-area touch point.

Step 3: Analyze movement velocity features of the at least two small-area touch points.

When the canvas-moving/zooming mode is enabled, the movement velocity features of the at least two small-area touch points are extracted in a specific time series and velocity changes of the at least two small-area touch points are analyzed continuously. Specifically, whether movement of the at least two small-area touch points meets an accidental touch mode or the canvas-moving/zooming mode may be determined by using an SVM model or a GRU model.

In another implementation, determining may be performed in the following manner: 20 ms is used as a time interval, and movement velocity data in a time period from 0 ms to 100 ms when a location of the small-area touch point changes is sampled. When movement distances of the at least two small-area touch points at movement velocities in 20 ms do not exceed 0.1 pixel, it is considered that the at least two small-area touch points move at a low speed. If any small-area touch point keeps moving at a low speed in 100 ms, it is considered that the touch point is a relatively static touch point. After the foregoing movement velocity is determined, if there are less than two non-relatively static touch points in current small-area touch points, it is determined that the touch points are in the accidental touch mode. Otherwise, it is preliminarily determined that the touch points are in the canvas-moving/zooming mode.

For a small-area touch point determined to be in the accidental touch mode, the canvas-moving/zooming mode is immediately canceled for the small-area touch point, and the canvas is frozen. The accidental touch point that has been determined is shielded, and the shielded touch point is not included in scenario prediction or a response range in subsequent determining or a subsequent response of a new touch point event.

For a touch point determined to be in the canvas-moving/zooming mode, step 4 needs to be performed for further analysis.

Step 4: Analyze stay duration of the at least two small-area touch points.

For the touch point determined to be in the canvas-moving/zooming mode in the previous step 3, low-speed movement duration needs to be further analyzed. An analysis process is usually comparing duration in which the current touch point keeps moving at a low speed with a preset threshold. The preset threshold may be customized based on a user requirement. In a possible implementation, the preset threshold is 100 ms. When duration in which any touch point keeps moving at a low speed is greater than 100 ms, it is considered that the touch point is the relatively static touch point. After the foregoing movement velocity is determined, if there are less than two non-relatively static touch points in the current small-area touch points, it is determined that the touch points are in the accidental touch mode. Otherwise, it is preliminarily determined that the touch points are in the canvas zooming mode.

For the small-area touch point determined to be in the accidental touch mode, the canvas-moving/zooming waiting mode is immediately canceled for the small-area touch point, a moving/zooming control point is eliminated, and the canvas is frozen. The accidental touch point that has been determined is shielded, and the shielded touch point is not included in the scenario prediction or the response range in the subsequent determining or the subsequent response of the new touch point event.

For the touch point preliminarily determined to be in the canvas-moving/zooming mode, step 5 needs to be performed for further analysis.

Step 5: Determine, based on changes of relative movement directions of a plurality of touch points, whether the touch points are accidental touch points.

It can be learned from the foregoing analysis in step 3 and step 4 that, in at least two small-area touch points determined to be non-relatively static, a touch point that can enter the current step and is not shielded is determined to be a non-accidental touch point. If a quantity of small-area touch points that are determined to be non-relatively static in the foregoing two steps is less than 2, all remaining small-area touch points are determined to be the accidental touch points and shielded. If a quantity of small-area touch points that are determined to be non-relatively static in the foregoing two steps is greater than or equal to 2, the canvas-moving/zooming waiting mode is maintained for the at least two small-area touch points, and determining in a next step is performed.

Step 6.1: The at least two small-area touch points move obviously and move irregularly.

When there are two or more remaining non-relatively static small-area touch points in the foregoing step, in this step, whether the at least two small-area touch points perform regular relative movement further needs to be determined. In a possible implementation, relative movement directions of at least two small-area touch points in a plurality of different multi-touch point operation modes (a multi-point accidental touch mode, an accidental touch writing mode, a canvas moving mode, and a canvas zooming mode) are used as sample data, to train the SVM model or the GRU model. Relative movement direction change features of all current non-relatively static small-area touch points in first 100 ms are extracted and input into the pre-trained SVM or GRU model, and whether relative movement direction changes of the current at least two small-area touch points belong to the regular relative movement or irregular relative movement is output.

When the at least two small-area touch points move obviously but a movement manner is the irregular relative movement, it is determined that the at least two touch points are the accidental touch points, the canvas-moving/zooming waiting mode is canceled, and the canvas is frozen immediately. The irregular movement is that the at least two small-area touch points do not move toward each other, move away from each other, or move at similar speeds in a same direction.

Step 6.2: The at least two small-area touch points move obviously and move toward each other or move away from each other.

When there are two or more remaining non-relatively static small-area touch points in the foregoing step, in this step, whether the at least two small-area touch points perform the regular relative movement further needs to be determined. Based on the determining manner in the foregoing step 6.1, whether the at least two small-area touch points move toward each other or move away from each other is determined. When the foregoing relative movement mode is met, it is determined that the movement of the at least two small-area touch points belongs to an intent of canvas zooming. Therefore, a canvas zooming operation is started, until it is detected that the at least two small-area touch points disappear. When it is detected that the at least two small-area touch points disappear, the canvas-moving/zooming mode is stopped immediately and the canvas is frozen.

Step 6.3: The at least two small-area touch points move obviously and move in a same direction.

When there are two or more remaining non-relatively static small-area touch points in the foregoing step, in this step, whether the at least two small-area touch points perform the regular movement further needs to be determined. Based on the determining manner in the foregoing step 6.1, whether the at least two small-area touch points move together at similar speeds in a same direction is determined. When the foregoing relative movement mode is met, it is determined that the movement of the at least two small-area touch points belongs to an intent of canvas moving. Therefore, a canvas moving operation is started, until it is detected that the at least two small-area touch points disappear. When it is detected that the at least two small-area touch points disappear, the canvas-moving/zooming mode is stopped immediately and the canvas is frozen.

In the solution in the foregoing embodiment, when the at least two touch points are detected, the canvas-moving/zooming waiting mode may be immediately enabled based on determining of the area of the touch point. Based on a basic movement velocity and a relative movement track feature of the touch point, whether the touch point is the accidental touch point is determined again, and whether to start a canvas-moving/zooming response is determined. In this process, a normal canvas zooming operation is not affected, and occurrence of an accidental touch problem can be effectively reduced.

All or some of the foregoing embodiments may be implemented by software, hardware, firmware, or any combination thereof. When the software is used for implementation, all or some of embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A method for preventing an accidental touch on a touchscreen, applied to a writing process on a canvas of a touchscreen, and comprising:
detecting at least one touch point;
determining a small-area touch point and/or a large-area touch point based on an area of the at least one touch point, and responding to a first operation based on a quantity of touch points;
determining a touch point in an accidental touch mode and a touch point in a non-accidental touch mode based on a quantity and movement features of large-area touch points and/or a quantity and movement features of small-area touch points, wherein the movement feature comprises one or more of a movement velocity, a movement track, a movement direction, and stay duration; and
responding to a second operation for the touch point in the accidental touch mode, wherein the second operation is used to cancel the first operation and process a result of the first operation.

2. The method according to claim 1, wherein the determining a small-area touch point and/or a large-area touch point based on an area of the at least one touch point, and responding to a first operation based on a quantity of touch points comprises:
enabling a writing mode based on a single small-area touch point;
enabling a moving/zooming waiting mode based on at least two small-area touch points that appear in a first time interval; and
enabling an eraser erase mode based on the large-area touch point.

3. The method according to claim 1, wherein the responding to a second operation for the touch point in the accidental touch mode comprises:
for a single small-area touch point determined to be in the accidental touch mode, interrupting a writing operation of the single small-area touch point and erasing a writing stroke of the single small-area touch point;
for at least two small-area touch points determined to be in the accidental touch mode, interrupting a moving/zooming waiting operation of the at least two small-area touch points and freezing the canvas; and
for a large-area touch point determined to be in the accidental touch mode, interrupting an erase operation of the large-area touch point and restoring an erase stroke of the large-area touch point.

4. The method according to claim 1, wherein the determining a touch point in an accidental touch mode and a touch point in a non-accidental touch mode based on a quantity and movement features of large-area touch points and/or a quantity and movement features of small-area touch points comprises:
determining, based on the quantity and the movement features of the large-area touch points, that the large-area touch point is one of a touch point in an eraser mode and the touch point in the accidental touch mode; and
determining, based on the quantity and the movement features of the small-area touch points, that the small-area touch point is one of a touch point in a moving/zooming mode, a touch point in a writing mode, and the touch point in the accidental touch mode.

5. The method according to claim 4, wherein the determining, based on the quantity and the movement features of the large-area touch points, that the large-area touch point is one of a touch point in an eraser mode and the touch point in the accidental touch mode comprises:
determining that a large-area touch point meeting a first condition is the touch point in the accidental touch mode, wherein
the first condition is that a movement velocity of a touch point is less than a first preset velocity and stay duration of the touch point is greater than first preset duration, and the touch point is determined to be the touch point in the accidental touch mode.

6. The method according to claim 4, wherein the determining, based on the quantity and the movement features of the small-area touch points, that the small-area touch point is one of a touch point in a moving/zooming mode, a touch point in a writing mode, and the touch point in the accidental touch mode comprises:
determining that a small-area touch point meeting a first condition is the touch point in the accidental touch mode; and
when at least two small-area touch points do not meet the first condition, and movement directions of the at least two small-area touch points do not meet a second condition, determining that the at least two small-area touch points are accidental touch points, wherein
the second condition comprises one of regular movement, movement in a same direction, movement toward each other in opposite directions, and movement away from each other in opposite directions.

7. The method according to any one of claims 1 to 3, wherein the determining a touch point in an accidental touch mode and a touch point in a non-accidental touch mode based on a quantity and movement features of large-area touch points and/or a quantity and movement features of small-area touch points comprises:
determining the touch point in the accidental touch mode and the touch point in the non-accidental touch mode based on the quantity, the movement features, and previous events of nearby regions of the large-area touch points and/or the quantity, the movement features, and previous events of nearby regions of the small-area touch points.

8. An apparatus for preventing an accidental touch on a touchscreen, used in a writing process on a canvas of a touchscreen, and comprising:
a detection module, configured to detect a touch point that appears on the touchscreen;
a processing module, configured to: determine a small-area touch point and/or a large-area touch point based on an area of at least one detected touch point, and respond to a first operation based on a quantity of touch points; and
a determining module, configured to determine a touch point in an accidental touch mode and a touch point in a non-accidental touch mode based on a quantity and movement features of large-area touch points and/or a quantity and movement features of small-area touch points, wherein the movement feature comprises one or more of a movement velocity, a movement track, a movement direction, and stay duration, wherein
the processing module is further configured to respond to a second operation for the touch point in the accidental touch mode, wherein the second operation is used to cancel the first operation and process a result of the first operation.

9. The apparatus according to claim 8, wherein the responding to a first operation based on a quantity of touch points comprises:
enabling a writing mode based on a single small-area touch point;
enabling a moving/zooming waiting mode based on at least two small-area touch points that appear in a first time interval; and
enabling an eraser erase mode based on the large-area touch point.

10. The apparatus according to claim 8, wherein the responding to a second operation for the touch point in the accidental touch mode comprises:
for a single small-area touch point determined to be in the accidental touch mode, interrupting a writing operation of the single small-area touch point and erasing a writing stroke of the single small-area touch point;
for at least two small-area touch points determined to be in the accidental touch mode, interrupting a moving/zooming waiting operation of the at least two small-area touch points and freezing the canvas; and
for a large-area touch point determined to be in the accidental touch mode, interrupting an erase operation of the large-area touch point and restoring an erase stroke of the large-area touch point.

11. The apparatus according to claim 8, wherein the determining a touch point in an accidental touch mode and a touch point in a non-accidental touch mode based on a quantity and movement features of large-area touch points and/or a quantity and movement features of small-area touch points comprises:
determining, based on the quantity and the movement features of the large-area touch points, that the large-area touch point is one of a touch point in an eraser mode and the touch point in the accidental touch mode; and
determining, based on the quantity and the movement features of the small-area touch points, that the small-area touch point is one of a touch point in a moving/zooming mode, a touch point in a writing mode, and the touch point in the accidental touch mode.

12. The apparatus according to claim 11, wherein the determining, based on the quantity and the movement features of the large-area touch points, that the large-area touch point is one of a touch point in an eraser mode and the touch point in the accidental touch mode comprises:
determining that a large-area touch point meeting a first condition is the touch point in the accidental touch mode, wherein
the first condition is that a movement velocity of a touch point is less than a first preset velocity and stay duration of the touch point is greater than first preset duration, and the touch point is determined to be the touch point in the accidental touch mode.

13. The apparatus according to claim 11, wherein the determining, based on the quantity and the movement features of the small-area touch points, that the small-area touch point is one of a touch point in a moving/zooming mode, a touch point in a writing mode, and the touch point in the accidental touch mode comprises:
determining that a small-area touch point meeting a first condition is the touch point in the accidental touch mode; and
when at least two small-area touch points do not meet the first condition, and movement directions of the at least two small-area touch points do not meet a second condition, determining that the at least two small-area touch points are accidental touch points, wherein
the second condition comprises one of regular movement, movement in a same direction, movement toward each other in opposite directions, and movement away from each other in opposite directions.

14. The apparatus according to any one of claims 8 to 10, wherein the determining a touch point in an accidental touch mode and a touch point in a non-accidental touch mode based on a quantity and movement features of large-area touch points and/or a quantity and movement features of small-area touch points comprises:
determining the touch point in the accidental touch mode and the touch point in the non-accidental touch mode based on the quantity, the movement features, and previous events of nearby regions of the large-area touch points and/or the quantity, the movement features, and previous events of nearby regions of the small-area touch points.

15. A touchscreen device, wherein the touchscreen device comprises at least a touchscreen and a processor, and during writing on the touchscreen, the processor performs the method according to any one of claims 1 to 7.

16. A computer-readable storage medium, wherein the computer-readable storage medium comprises instructions, and when the instructions are run on a computer, the computer performs the method according to any one of claims 1 to 7.

17. A computer program product, wherein the computer program product comprises instructions, and when the instructions are run on a computer, the computer performs the method according to any one of claims 1 to 7.
